# EUROPÄISCHE PATENTSCHRIFT

(11) **EP 0 409 857 B1**
(45) Veröffentlichungstag und Bekanntmachung des Hinweises auf die Patenterteilung: **29.12.1993**
(21) Anmeldenummer: 89904008.3
(22) Anmeldetag: 11.04.1989
(51) Int. Cl.: G01J 1/42, B23K 26/04

(54) **VERFAHREN UND VORRICHTUNG ZUR BESTIMMUNG DER LAGE EINES LASERSTRAHLS**
PROCESS AND DEVICE FOR DETERMINING THE POSITION OF A LASER BEAM
PROCEDE ET DISPOSITIF DE DETERMINATION DE LA POSITION D'UN RAYON LASER

(30) Priorität: 12.04.1988 DE 3812091
(43) Veröffentlichungstag der Anmeldung: 30.01.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: KRAMER, Reinhard, D-5100 Aachen (DE); RÜHL, Falk, D-5106 Roetgen-Rott (DE)
(74) Vertreter: Eichler, Peter, Dipl.-Ing.
(86) Internationale Anmeldenummer: DE8900216
(87) Internationale Veröffentlichungsnummer: WO8909928

(56) Entgegenhaltungen:
- EP-A- 0 050 159
- EP-A- 0 141 724
- FR-A- 1 564 270
- US-A- 4 035 654
- US-A- 4 692 623

## Beschreibung

Die Erfindung bezieht sich auf ein Verfahren zur Bestimmung der Lage eines Laserstrahls, bei dem einen Teil der Strahlungsenergie absorbierende temperaturabhängige elektrische Drahtsensoren um den Strahl herum an vorbestimmten Positionen nahe dem Strahlrand angeordnet werden, bei dem die Drahtsensoren auf einer vorbestimmten Bahn für jede Koordinatenachse zwischen Strahlrand und Strahlzentrum bewegt werden, und bei dem mit Hilfe von Sensor-Meßwerten auf die Lage der Strahlachse rückgeschlossen wird.

Bei der Materialbearbeitung mit Laserstrahlung ist die konstante Lage des Laserstrahls innerhalb des Strahlführungssystems für eine gleichbleibende Qualität der Bearbeitung wichtig, weil Abweichungen der Strahllage von der Sollposition die Lage, Form und Größe des Fokus verändern können.

Für eine Laserstrahlquelle ist die genaue Justage der Strahlachse auf die Resonatorachse eine notwendige Voraussetzung, um die maximale Laserleistung und eine Intensitätsverteilung hoher Qualität zu erhalten. Die Verschiebung und Bewegung der Strahlachse bezüglich der Resonatorachse äußert sich in einer Verschiebung der Intensitätsverteilung relativ zur Resonatorachse.

Die Bestimmung des Strahlzentrums muß mit einer Genauigkeit von 0.1 mm - 1 mm erfolgen, damit bei der Justage eines Laserresonators die Strahlachse mit einer Genauigkeit von mindestens 1/10 des Strahldurchmessers auf die Resonatorachse justiert werden kann. Dies ist nowendig, um die maximale Laserleistung durch eine optimale Nutzung des Entladungsvolumens erreichen zu können. Die Messung sollte den Strahl nur gering oder gar nicht beeinflussen, damit die Intensitätsverteilung und die Laserleistung während der Messung innerhalb eines Resonators nur wenig geändert wird. Die gleiche Forderung gilt beim Einsatz in Strahlführungssystemen, wo unter Umständen mehrere Geräte gleichzeitig eingesetzt werden, und jede Veränderung der Intensitätsverteilung bzw. der Laserleistung das Ergebnis der Materialbearbeitung negativ beeinflussen kann.

Im Fall rotationssymmetrischer Intensitätsverteilungen ist das Strahlzentrum durch die Symmetrieachse der Verteilung gegeben. Ist die Verteilung asymmetrisch, so kann durch Berechnung des Schwerpunkts der Strahlfläche das Strahlzentrum bestimmt werden. Für eine genaue Bestimmung des Strahlzentrums beliebig geformter Strahlung ist deshalb die Messung der Intensitätsverteilung notwendig. Unter der Annahme, daß die zu vermessende Intensitätsverteilung punktsymmetrisch ist, kann der Schwerpunkt auch ohne genaue Kenntnis der Intensitätsverteilung bestimmt werden. Diese Randbedingung ist nicht restriktiv, weil fast alle kommerziellen Lasersysteme eine rotationssymmetrische, elliptische oder rechteckförmige Intensitätsverteilung besitzen. In diesem Fall ist es zur Bestimmung der Strahllage ausreichend, den Rand des Strahls auf zwei Achsen zu bestimmen.

Aus EP-A-0 050 159 ist ein Verfahren mit den eingangs genannten Merkmalen bekannt. Es sind zwei im rechten Winkel zueinander angeordnete Drahtsensoren vorhanden, deren Meßwerte auf den maximalen Meßwert hin ausgewertet werden. Die Meßstelle des Maximalmeßwerts entspricht der Lage der Strahlachse. Ist das Maximum aller Meßwerte nur wenig ausgeprägt, so ergeben sich entsprechende Unsicherheiten bei der Bestimmung der Lage der Strahlachsen.

Aus der US-A-40 35 654 ist ein Verfahren zur Bestimmung der Lage der Strahlachse bekannt, bei dem innerhalb des Strahlbereichs thermische Sensoren an drei Stellen angeordnet werden. Die Signale der Sensoren werden dazu benutzt, die Lage des Strahls zu berechnen. Die Meßgenauigkeit dieses Verfahrens ist wegen der Messung an nur drei Stellen vergleichsweise gering.

Aus der EP-A-0 141 724 ist es bekannt, vier Nadeln um die Sollage des Laserstrahls herum zu gruppieren, die mehr oder weniger weit zum Strahlzentrum hin vorgeschoben werden können. Auf die Nadeln auftreffende Laserstrahlung erwärmt die Nadeln und die Erwärmung jeder Nadel wird mit einem Temperaturfühler gemessen. Mit diesem bekannten Verfahren kann nur sehr langsam gearbeitet werden, bedingt durch die große Wärmekapazität der Nadeln. Die Meßgenauigkeit ist wegen der Beschränkung des Meßbereichs auf den Strahlrand gering und bei Durchmesseränderungen des Laserstrahls müssen die Nadeln in umständlicher Weise neu justiert werden. Es können sich auch Meßfehler dadurch ergeben, daß die Nadeln bei einer entsprechenden Intensitätsverteilung an den für diese falschen Stellen angeordnet sind.

Demgegenüber liegt der Erfindung die Aufgabe zugrunde, das Verfahren der eingangs genannten Art so zu verbessern, daß mit ihm schnell gearbeitet werden kann, auch bei veränderlichen Strahldurchmessern.

Diese Aufgabe wird dadurch gelöst, daß die Drahtsensoren von außerhalb des Laserstrahlbereichs schrittweise bewegt und nach jedem Schritt der Meßwert der Drahtsensoren registriert wird, daß danach der Strahlrand mit einem bestimmten Prozentsatz des maximalen registrierten Meßwerts als Schwellwert ermittelt wird, daß von den Schwellwerten ausgehend den Koordinatenachsen parallele Strahlrandtangenten definiert werden, und daß dann die Lage der Strahlachse durch Bestimmung des Flächenschwerpunkts der von den Strahlrandtangenten umschlossenen Fläche ermittelt wird.

Für die Erfindung ist von Bedeutung, daß die Strahllage in einfacher Weise dadurch erfaßt werden kann, daß die Drahtsensoren den den Strahl aufweisenden Bereich überstreichen und dabei in schneller Folge eine Vielzahl von Meßwerten registrieren können, mit deren Hilfe eine dem Strahlquerschnitt etwa entsprechende Fläche ermittelt und rechnerisch zur Bestimmung der Strahlachse herangezogen wird. Infolge der Vielzahl der Meßwerte und der dadurch ereichten Genauigkeit bei Ermittlung der Intensitätsverteilung des Laserstrahls über die Koordinatenachsen läßt sich die von den Strahlrandtangenten umschlossene Fläche als Mittel zur Bestimmung der Lage der Strahlachse recht genau bestimmen und damit auch die Lage des Strahlzentrums bzw. die Lage des Laserstrahls.

Das Verfahren beinhaltet Meß- und Rechenvorgänge, die automatisierbar sind, so daß das Verfahren grundsätzlich sehr schnell durchgeführt werden kann und infolgedessen auch in Steuer- und Regelkreisen eingesetzt werden kann, welche die Beeinflussung der Lage eines Laserstrahls betreffen.

Vorteilhafterweise wird das Verfahren so durchgeführt, daß der gesamte Strahldurchmesser von zwei Paaren einander gegenüberliegender Drahtsensoren erfaßt wird, und daß die Drahtsensoren nach dem Meßvorgang in eine strahlrandseitige Ruhestellung zurückbewegt werden. Dabei vermißt jeder Drahtsensor eines Sensorpaares die Hälfte des gesamten Strahldurchmessers, so daß sich eine entsprechende Verfahrensbeschleunigung ergibt.

Da das schrittweise Messen mit kurzen Taktzeiten erfolgen soll, die Erwärmung des Drahtsensors durch den Laserstrahl jedoch nur mit gewisser Verzögerung erfolgen kann, werden die Meßwerte der Drahtsensoren über ein Differential-Proportionalglied erfaßt. Damit wird das Tiefpaßverhalten des Drahtsensors kompensiert und die Meßgeschwindigkeit erheblich gesteigert.

Vorteilhafterweise wird das erfindungsgemäße Verfahren wahrend eines mit dem Laserstrahl erfolgenden Bearbeitungsvorgangs eines Werkstücks durchgeführt und die dabei ermittelte Strahllage wird zur Strahllageeinstellung herangezogen. Dadurch kann die Genauigkeit und/oder die Geschwindigkeit bei einer Bearbeitung mit Laserstrahlung verbessert bzw. gesteigert werden. Da es dazu in der Regel auch erforderlich ist, den Laserstrahl auszurichten, wird das Verfahren derart ausgestaltet, daß es an zwei in Strahlrichtung mit Abstand hintereinander liegenden Stellen durchgeführt und der Laserstrahl mit Hilfe der von beiden Meßstellen bestimmten Parameter ausgerichtet wird.

Die Erfindung bezieht sich auch auf eine Vorrichtung zur Bestimmung der Lage eines Laserstrahls, insbesondere zur Durchführung des Verfahrens, mit mindestens zwei temperaturabhängigen elektrischen Drahtsensoren, die mit einer Halterung quer zum Strahl motorisch verstellbar und an eine Meßeinrichtung angeschlossen sind.

Demgegenüber liegt der Erfindung die Aufgabe zugrunde, eine Vorrichtung der vorstehend genannten Art so zu verbessern, daß eine vollständige Erfassung des Laserstrahlquerschnitts mit geringem baulichen Aufwand und günstigem zeitlichen Verhalten erreicht wird.

Diese Aufgabe wird dadurch gelöst, daß die Drahtsensoren eine Meßfläche einschließende Drähte sind, daß die Halterung im Sinne einer Veränderung der Meßfläche schrittweise verstellbar ist, und daß die Meßeinrichtung Mittel zur rechnerischen Bestimmung des Strahlrandes des Laserstrahls enthält.

Der Einsatz von Drähten als Drahtsensoren bedingt geringe bestrahlte Sensoroberflächen, entsprechend geringe Leistungsabsorption und damit eine geringe Reduzierung der Laserstrahlleistung durch die Messung, verbunden mit einem günstigen zeitlichen Verhalten bei einer Änderung der Strahlintensität. Mit Drahtsensoren läßt sich eine Meßfläche vollständig einschließen und dadurch eine vollständige Erfassung des gesamten Querschnitts des Laserstrahls erreichen. Der motorische Antrieb der Halterung ist Voraussetzung für eine Automatisierung des Meßprozesses sowie die Schnellerfassung des gesamten Strahlquerschnitts.

Vorteilhafterweise sind die vier Drahtsensoren einander paarweise parallel und die Drahtpaare rechtwinklig zueinander angeordnet. Das bedeutet eine symmetrische Anordnung der Drahtsensoren, so daß die daran anschließenden Komponenten entsprechend identisch ausgebildet werden können. Grundsätzlich ergibt sich durch die Parallelanordnung zweier Drahtsensoren, daß diese den zu erfassenden Meßbereich jeweils zur Hälfte bezüglich einer Koordinate erfassen, während die beiden Drahtsensoren des anderen Drahtpaares dem Meßvorgang in einer zur ersten rechtwinkligen zweiten Koordinate dienen.

Die Erfindung wird so ausgestaltet, daß die Halterung aus zwei mit ihren offenen Seiten einander zugekehrten U-förmigen Gabeln besteht, und daß jede Gabel zwei Drahtsensoren kreuzweise gespannt hält.

Um den Gabelinnenraum möglichst vollständig für den Strahlquerschnitt ausnutzen zu können, ist für jeden Drahtsensor eine Spanneinrichtung außerhalb des Gabelinnenraums vorhanden. Andererseits läßt sich dadurch eine optimale Stabilität der Gabeln bei geringem baulichen Aufwand erreichen bzw. eine sehr exakte Anordnung der Drahtsensoren mit Hilfe der Gabeln.

Zur motorischen Veränderung der durch die Drahtsensoren gebildeten Meßfläche sind die Gabeln auf einem Gleitführungsgestell quer zum Laserstrahl aufeinander zu oder von einander weg verstellbar. Der bauliche Aufwand für die Bewegungsmechanik wird dadurch klein gehalten, daß das Gleitführungsgestell im wesentlichen aus zwei parallelen Schlittenstangen mit darauf gleitbeweglichen, je eine Gabel tragenden Schlitten besteht, die an gegenläufigen Trums eines von einem Stellmotor antreibbaren Antriebsriemens befestigt werden.

Eine vorteilhafte Ausgestaltung der Meßeinrichtung besteht darin, daß sie für jeden Drahtsensor einen vorgeschalteten Signalgeber, einen nachgeschalteten Analog/Digitalwandler und als Mittel zur rechnerischen Bestimmung des Strahlrandes einen alle Meßsignale auswertenden Rechner hat, der an den Stellmotor angeschlossen ist und eine Anzeigeeinrichtung aufweist.

Dem Ahalog/Digitalwandler ist ein Addierglied vorgeschaltet, welches seinem Eingangssignal einen daraus mit einem Differenzierglied gewonnenen Signalanteil aufzuprägen vermag. Dadurch wird dem Wandler sehr schnell ein auswertbares Impulssignal zur Verfügung gestellt.

Um die Vorrichtung auch bei Bearbeitungsvorgängen von Werkstücken vorteilhaft einsetzen zu können, ist der Rechner an den Antrieb eines die Strahllage beeinflussenden Spiegelsystems angeschlossen.

### Kurze Beschreibung der Zeichnungen

Die Erfindung wird anhand eines in der Zeichnung dargestellten, die Vorrichtung betreffenden Ausführungsbeispiels erläutert, auch bezüglich des Verfahrens. Es zeigt:
- Fig. 1: eine teilweise geschnittene Seitenansicht einer Meßvorrichtung zur Bestimmung der Lage eines Laserstrahls,
- Fig. 2: den Schnitt II-II der Fig. 1,
- Fig. 3a, b: die mechanische Verstellung der Sensoren,
- Fig. 4: ein Blockschaltbild zur Erläuterung der Funktion der Meßeinrichtung,
- Fig. 5a, b: diagrammartige Darstellungen zur Erläuterung des erfindungsgemäßen Verfahrens, und
- Fig. 6: ein die Strahllage beeinflussendes Spiegelsystem.

### Bester Weg zur Ausführung der Erfindung

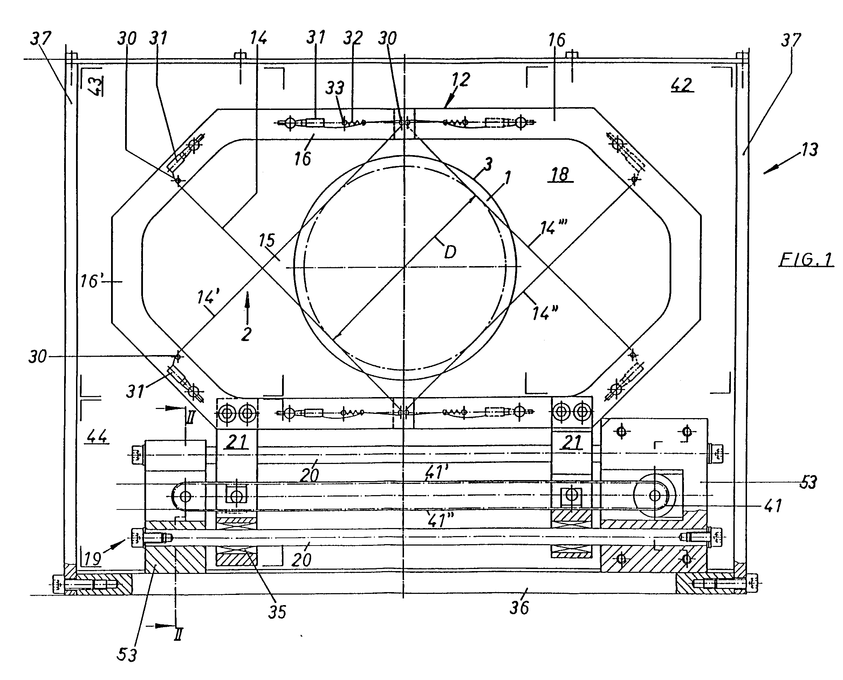

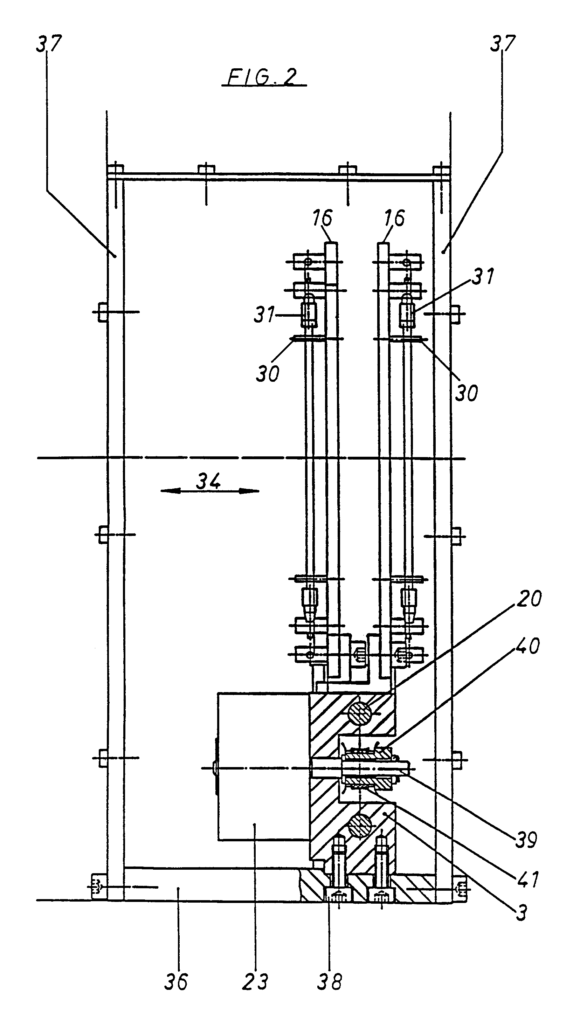

Gemäß Fig. 1, 2 hat die Vorrichtung eine Halterung 12 für Sensoren 2. Letztere sind Drähte 14 bis 14''', die einander paarweise parallel angeordnet sind. Die Drahtpaare 14, 14'' und 14', 14''' sind rechtwinklig zueinander angeordnet. Die Drähte 14 bis 14''' umschließen infolgedessen eine Meßfläche 15, die quer zu einem Laserstrahl 1 angeordnet und etwa auf dessen Querschnitt abgestimmt ist. Insbesondere befinden sich die Drähte 14' bis 14''' in der dargestellten Stellung am Strahlrand 3. Der von ihnen eingeschlossene Strahldurchmesser ist D.

Die Halterung 12 besteht aus zwei U-förmigen Gabeln 16, die mit ihren offenen Seiten einander zugekehrt sind. Jede Gabel 16 hält zwei Drähte 14, 14' und 14'' , 14''' kreuzweise gespannt. Zur Drahtführung dienen zunächst aus isolierwerkstoff, z.B. Polyäthylen, bestehende Umlenkstifte 30, die für eine exakte, stets gleichbleibende Positionierung der Drähte 14 bis 14''' sorgen. Von jedem Umlenkstift 30 wird der zugehörige Draht einem Spannelement 31 zugeführt, das gleichzeitig der Strombeaufschlagung dient. An einem Ende jedes Drahts ist zwischen dem Umlenkstift 30 und dem Spannelement 31 eine Spannfeder 32 angeordnet, die mit einem Ende an dem Draht, z.B. 14' angreift, und mit ihrem anderen Ende an einem Ankerstift 33 befestigt ist. Dieser besteht ebenfalls aus Isolierwerkstoff. Jeder Draht ist von einem am Ende eines Gabelarms gelegenen Umlenkstift 30 zu einem Umlenkstift 30 des vom Strahl 1 entfernten Gabelbodens 16' geführt, der gemäß Fig. 1 trogförmig ausgebildet ist.

Gemäß Fig. 2 sind die Bügel 16 in Strahlrichtung 34 hintereinander angeordnet und tragen die Drähte 14, 14' einerseits und 14'', 14''' auf voneinander abgewendeten Seiten, wo dementsprechend auch die erforderlichen Umlenk- und Ankerstifte 30, 33, die Federn 32 und die Spannelemente 31 angeordnet sind, so daß sich insgesamt eine flachbauende Anordnung ergibt.

Die Gabein 16 werden jeweils von einem Schlitten 21 gehalten. Jeder Schlitten ist auf Schlittenstangen 20 gleitbeweglich, wozu er die aus Fig. 1 ersichtlichen Gleitlager 35 aufweist. Die Gleitstangen 20 sind in Stehlagern 3 befestigt, welche ihrerseits in in Fig. 2 dargestellter Weise an einem Boden 36 eines Gestells 37 mit Schrauben 38 befestigt sind.

Fig. 2 zeigt einen Stellmotor 23 zum Antrieb der Schlitten 21 und damit der Gabeln 16. Der Stellmotor 23 ist an einem Stehlager 53 angebracht und treibt eine Antriebsachse 39, auf der ein Antriebsritzel 40 drehfest sitzt. In diesem Antriebsritzel 40 greift ein Antriebsriemen 41 an, der als Zahnriemen ausgebildet ist und über ein entsprechendes Ritzel des anderen Stehlagers 53 gespannt gehalten umläuft. Am oberen Trum 41' ist der in Fig. 1 linke Schlitten 21 angebracht und am unteren Trum 41'' der in Fig. 1 rechte Schlitten 21. Infolgedessen werden die Gabeln 16 bei jeder Verstellung des Riemens 41 gegenläufig bewegt, und zwar aufeinander zu bei Drehung des Stellmotors 23 gemäß Fig. 1 im Uhrzeigersinn und von einander weg bei Drehung des Motors 23 im Gegenuhrzeigersinn.

Die Fig 1, 2 zeigen außerdem noch ein auf dem Boden 36 sitzendes Gestell 37 zur Aufnahme eines Netzteils 42, einer Rechnerplatine 43 und einer Wandlerplatine 44, so daß alle für den Meßvorgang erforderlichen Teile der Vorrichtung in gedrängter Bauweise um den Laserstrahl 1 herum angeordnet sind.

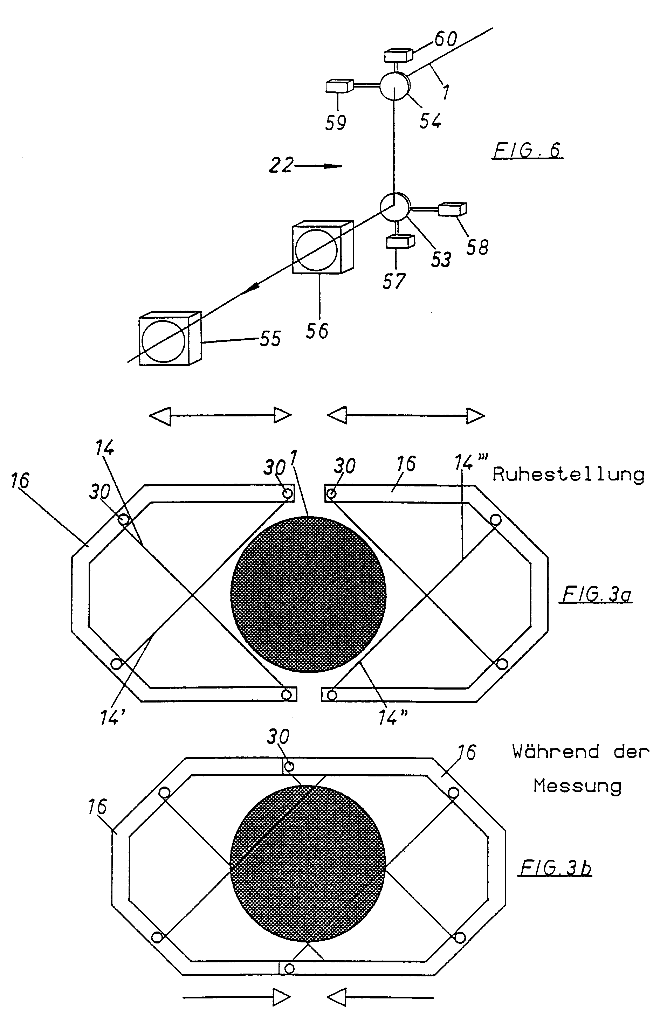

Fig. 3a erläutert die Verstellung der Gabeln 16 in der Weise, daß ein Auseinanderfahren der Gabeln 16 zu einem vollständigen Entfernen der Drähte 14 bis 14''' aus dem Bereich des Laserstrahls 1 führt, während gemäß Fig. 3b die Gabeln 16 in Pfeilrichtung so aufeinander zu bewegt werden, daß die von ihnen gehaltenen Drähte 14 bis 14''' durch den Querschnitt des Laserstrahls 1 wandern, bis die von ihnen eingeschlossene Meßfläche 15 zu Null wird und damit der gesamte Strahlquerschnitt vermessen werden kann.

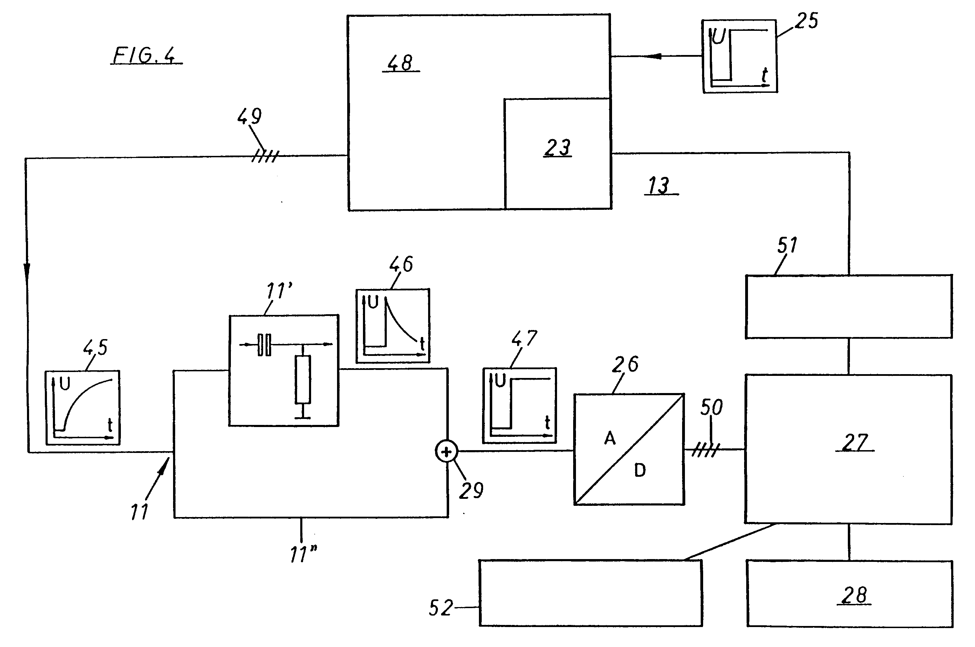

Fig. 4 erläutert die erforderliche Meßeinrichtung. Diese ist allgemein mit 13 bezeichnet und beinhaltet im Meßkopf 48 im wesentlichen die Drähte 14 bis 14''' sowie den Stellmotor 23 und Signalgeber 25 für diese Drähte. Aus der Darstellung ist ersichtlich, daß jeder Draht zur Messung bei einer bestimmten Schrittstellung mit einer Meßspannung beaufschlagt wird, wobei über einen eingeprägten Strom eine meßbare Spannungsänderung erfolgt, wenn sich der Widerstand des Drahtes infolge seines Temperaturkoeffizienten ändert, weil der Draht vom Laserstrahl entsprechend erwärmt wurde. Das durch den Draht bedingte Antwortsignal hat die im Block 45 dargestellte Ausbildung U = f(t). Dieses Meßsignal eines Drahtes wird einem Differential-Proportionalglied 11 zugeführt, dessen einer Leitungsast 11'' an ein Addierglied 29 angeschlossen ist und dessen anderer Ast ein Differenzierglied 11' aufweist, mit dessen Hilfe von dem Meßsignal des Drahtes gemäß Block 45 ein Spannungsanteil U = f(t) gemäß Block 46 abgeleitet und der Spannung gemäß Block 45 addiert wird, so daß sich durch das Addierglied 29 der Spannungsverlauf U = f(t) gemäß Block 47 ergibt, also ein Spannungs-Zeitverhalten, wie es durch den Signalgeber 25 vorgegeben ist. Auf diese Weise wird das Tiefpaßverhalten des Drahtes vermieden, also die Verzögerung der Messung dadurch, daß der Spannungsanstieg gemäß Block 45 zu langsam ist.

Das vom Addierglied 29 abgegebene Signal, das im Idealfall eine sehr steile Anstiegsflanke hat, wird auf den Analog-Digitalwandler 26 gegeben, der den Rechner 27 entsprechend beaufschlagt. Bei Vorstehendem versteht es sich, daß alle beschriebenen Teile der Meßeinrichtung bis zum Rechner 27 vierfach vorhanden sind, weil mit vier Drähten 14 bis 14''' gemessen wird. Das wurde durch die Vierfachleitungen 49 zwischen Meßkopf 48 und Differential-Proportionalglied 11 sowie die Vierfachleitungen 50 zwischen Analog/Digitalwandler und Rechner 27 symbolisiert.

Der Rechner 27 beaufschlagt über einen Motor-Interface 51 den Stellmotor 23, nachdem ihm die Meßsignale vorliegen. Außerdem steuert er eine Anzeigeeinrichtung, an der die Positionen der Drähte 14 bis 14''' und die Lage des letztlich ermittelten Strahlzentrums bzw. der Strahldurchmesser abgelesen werden können. Darüber hinaus ist der Rechner 27 mit einem Interface 52 zur Steuerung des in Fig. 6 dargestellten Spiegelsystems 22 verbunden.

Dieses Spiegelsystem 22 besteht aus einem ersten stellbaren Spiegel 54 und einem zweiten stellbaren Spiegel 53, welche die Lage des Laserstrahls 1 beeinflussen. Außerdem sind in Fig. 6 zwei Vorrichtungen 55, 56 zur Bestimmung der Lage des Laserstrahls 1 angeordnet. Die erste Vorrichtung 56 ist möglichst nahe dem zweiten Spiegel 53 angeordnet, um die Lage des Strahls 1 auf diesem Spiegel 53 möglichst genau erfassen zu können. Diese Lage wird mit dem Spiegel 54 eingestellt, indem dieser mit den Stellmotoren 59, 60 um seine horizontale Achse und/ oder um seine vertikale Achse geschwenkt wird. Mit dem zweiten Spiegel 53 wird die Richtung des Strahls 1 eingestellt, indem der Spiegel 53 um seine horizontale Achse mittels des Stellmotors 58 und/oder um seine vertikale Achse mit Hilfe des Stellmotors 57 geschwenkt wird. Während die Stellmotoren 57, 58 von der Vorrichtung 55 beaufschlagt werden, wird der Spiegel 54 von der Vorrichtung 56 eingestellt. Die beiden Vorrichtungen 55, 56 sind mit Abstand voneinander angeordnet, um einerseits die Lage des Strahls 1 erfassen zu können (Vorrichtung 56) und andererseits die Strahlrichtung zu bestimmen (Vorrichtung 55). Aus dem Abstand der Vorrichtungen 55, 56 vom Spiegel 53 und der gemessenen Abweichung des Strahls von der Sollage kann mit der Geradengleichung die Lage des Strahls 1 auf dem zweiten Spiegel 53 und damit die Richtung des Strahls bestimmt werden. Die Einstellung der Strahllage erfolgt also in zwei Schritten. Zuerst wird mit Hilfe des ersten Spiegels 54 das Strahl 1 so eingestellt, daß er auf das Zentrum des zweiten Spiegels 53 fällt und in einem zweiten Schritt wird die Strahllage mit dem Spiegel 53 auf die Sollachse eingestellt.

Die Messung mit einer Vorrichtung 55, 56 wird wie folgt durchgeführt:

Zunächst werden die Gabeln 15 in ihre in Fig. 3a dargestellte Ruhestellung gebracht, in der die Drähte 14 bis 14''' außerhalb des Bereichs des Laserstrahls 1 angeordnet sind und von diesem nicht erwärmt werden. Dann werden die Gabeln 16 und damit die Drähte 14' bis 14''' schrittweise zum Strahlzentrum 4 hin auf einer linearen Bahn bewegt. In jeder Meßstellung wird die Temperatur der Drähte 14 bis 14''' gemessen und mit der in Fig. 4 dargestellten Schaltung abgespeichert. Dabei erfolgt in nicht dargestellter Weise ein Vergleich mit einem fest vorgegebenen Maximalwert, der auf die maximal zulässige Temperatur abgestimmt ist, um ein Durchschmelzen der Drähte 14 bis 14''' während der Messung zu verhindern. Falls dieser Maximalwert überschritten wird, fahren die Gabeln 16 sofort nach außen in die Ruhestellung zurück. Die Gabeln 16 werden solange aufeinander zubewegt, bis die von den Drähten 14 bis 14''' umschlossene Meßfläche 15 zu Null geworden ist. Danach werden die Gabeln 16 in die Ruhestellung gemäß Fig. 3a zurückgefahren.

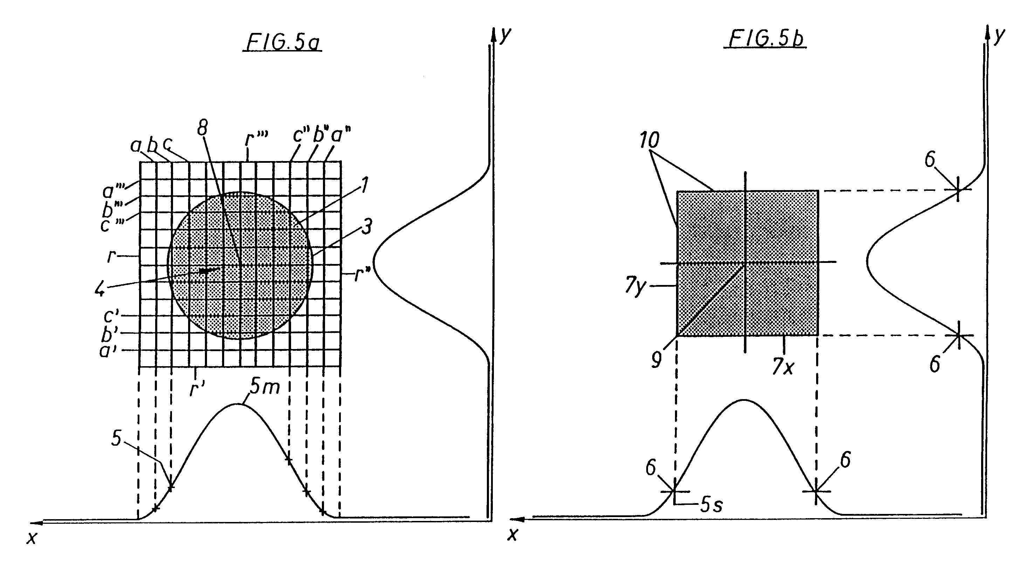

Fig. 5a zeigt den Laserstrahl 1 und die Ruhepositionen r bis r''' der Drähte 14 bis 14''' bei Ruhestellung der Gabeln 16 gemäß Fig. 3a. Die Drähte 14 bis 14''' umgeben den Laserstrahl dabei mit Abstand. Beim Aufeinanderzubewegen der Gabeln 16 werden sie in die Stellungen a, b, c bzw. a'', b'', c'' bewegt, dringen also linear vom Strahlrand 3 zum Strahlzentrum 4 vor. Die in den jeweiligen Stellungen a, b, c und a'', b'', c'' ermittelten Meßwerte 5 werden bezüglich der Koordinatenachse x und bezüglich der Koordinatenachse y aufgetragen, so daß sich die in Fig. 5a dargestellten Meßkurven ergeben. Die Meßkurven haben jeweils einen maximalen registrierten Wert 5m. Vor der Auswertung dieser Kurven wird von den einzelnen Meßwerten der Ruhewert subtrahiert.

Fig. 5b zeigt die Meßkurven der Fig. 5a zur Auswertung des Meßergebnisses. Zunächst werden mit einem bestimmten Prozentsatz des maximalen Meßwertes 5m jeder Meßkurve Schwellwerte 6 bestimmt. Der Prozentsatz wird beispielsweise mit 20% angenommen. Diese Schwellwerte 6 werden auf den ermittelten Meßkurven festgelegt und von da aus werden den Koordinatenachsen x, y parallele Strahlrandtangenten 7x, 7y definiert, mit denen eine äquivalente Strahlfläche 10 bestimmt wird. Der Flächenschwerpunkt 9 entspricht der Lage der Strahlachse 8 des Laserstrahls 1. Aus der Lage der Schwellwerte 6 kann auch der Strahlradius näherungsweise bestimmt werden.

Von Bedeutung für die meßtechnische Erfassung der Lage des Laserstrahls ist dessen Umschließung durch die Sensoren 2 bzw. die Drähte 14 bis 14'''. Stattdessen kann auch ein Sensor verwendet werden, der die schrittweise Messung auf mehreren konzentrischen kreisförmigen Bahnen oder auf einer spiraligen Bahn vornimmt. Eine Kombination der oben beschriebenen und der vorgenannten schrittweisen Messungen besteht darin, den Sensor nach Art einer Irisblende auszubilden und schrittweise messen zu lassen.

Für den praktischen Einsatz des Verfahrens zur Bestimmung der Lage des Laserstrahls und für den Einsatz der Meßvorrichtung ist deren einfache mechanische Konstruktion wichtig. Der Draht ist thermisch hoch belastbar und absorbiert einen geringen Anteil der Strahlleistung, beispielsweise weniger als 1%, so daß die Messung ohne Rückwirkungen auch während einer Materialbearbeitung durchgeführt werden kann. Die Unabhängigkeit der Meßvorrichtung vom Strahldurchmesser und von einer genauen Justage bei verschleißfreier Messung machen das Gerät für den Einsatz in automatisierten Prozeß geeignet.

### Gewerbliche Verwertbarkeit

Das erfindungsgemäße Verfahren dient dazu das Verfahren zur Bestimmung der Lage eines Laserstrahls so zu verbessern, daß mit ihm schnell gearbeitet werden kann, auch bei veränderlichen Strahldurchmessern.

## Patentansprüche

1. Verfahren zur Bestimmung der Lage eines Laserstrahls (1), bei dem einen Teil der Strahlungsenergie absorbierende temperaturabhängige elektrische Drahtsensoren (2) um den Strahl herum an vorbestimmten Positionen nahe dem Strahlrand (3) angeordnet werden, bei dem die Drahtsensoren (2) auf einer vorbestimmten Bahn für jede Koordinatenachse (x,y) zwischen Strahlrand (3) und Strahlzentrum (4) bewegt werden, und bei dem mit Hilfe von Sensor-Meßwerten (5) auf die Lage der Strahlachse (8) rückgeschlossen wird, **dadurch gekennzeichnet**, daß die Drahtsensoren (2) von außerhalb des Laserstrahlbereichs schrittweise bewegt und nach jedem Schritt der Meßwert (5) der Drahtsensoren (2) registriert wird, daß danach der Strahlrand (3) mit einem bestimmten Prozentsatz des maximalen registrierten Meßwerts (5m) als Schwellwert (6) ermittelt wird, daß von den Schwellwerten (6) ausgehend den Koordinatenachsen (x,y) parallele Strahlrandtangenten (7x,7y) definiert werden, und daß dann die Lage der Strahlachse (8) durch Bestimmung des Flächenschwerpunkts (9) der von den Strahlrandtangenten (7x,7y) umschlossenen Fläche (10) ermittelt wird.

2. Verfahren nach Anspruch 1, **dadurch gekennzeichnet**, daß der gesamte Strahldurchmesser von zwei Paaren einander gegenüberliegender Drahtsensoren (2) erfaßt wird, und daß die Drahtsensoren (2) nach dem Meßvorgang in eine strahlrandseitige Ruhestellung zurückbewegt werden.

3. Verfahren nach Anspruch 1 oder 2, **dadurch gekennzeichnet**, daß die Meßwerte (5) der Drahtsensoren (2) über ein Differential-Proportionalglied (11) erfaßt werden.

4. Verfahren nach einem oder mehreren der Ansprüche 1 bis 3, **dadurch gekennzeichnet**, daß es während eines mit dem Laserstrahl (1) erfolgenden Bearbeitungsvorgangs eines Werkstücks durchgeführt und die dabei ermittelte Strahllage zur Strahllageeinstellung herangezogen wird.

5. Verfahren nach einem oder mehreren der Ansprüche 1 bis 4, **dadurch gekennzeichnet**, daß es an zwei in Strahlrichtung mit Abstand hintereinander liegenden Stellen durchgeführt und der Laserstrahl (1) mit Hilfe der von beiden Meßstellen bestimmten Parameter ausgerichtet wird.

6. Vorrichtung zur Bestimmung der Lage eines Laserstrahls (1), insbesondere zur Durchführung der Verfahren nach einem oder mehreren der Ansprüche 1 bis 5, mit mindestens zwei temperaturabhängigen elektrischen Drahtsensoren (2), die mit einer Halterung (12) quer zum Strahl (1) motorisch verstellbar und an eine Meßeinrichtung angeschlossen sind, **dadurch gekennzeichnet**, daß die Drahtsensoren (2) eine Meßfläche (15) einschließende Drähte (14 bis 14''') sind, daß die Halterung (12) im Sinne einer Veränderung der Meßfläche (15) schrittweise verstellbar ist, und daß die Meßeinrichtung Mittel (27) zur rechnerischen Bestimmung des Strahlrandes (3) des Laserstrahls (1) enthält.

7. Vorrichtung nach Anspruch 6, **dadurch gekennzeichnet**, daß vier Drahtsensoren (2) einander paarweise parallel und die Drahtpaare (14,14'';l4',14''') rechtwinklig zueinander angeordnet sind.

8. Vorrichtung nach Anspruch 6 oder 7, **dadurch gekennzeichnet**, daß die Halterung (12) aus zwei mit ihren offenen Seiten einander zugekehrten U-förmigen Gabeln (16) besteht, und daß jede Gabel (16) zwei Drahtsensoren (2) kreuzweise gespannt hält.

9. Vorrichtung nach einem oder mehreren der Ansprüche 6 bis 8, **dadurch gekennzeichnet**, daß für jeden Drahtsensor (2) eine Spanneinrichtung (31,32) außerhalb des Gabelinnenraums (18) vorhanden ist.

10. Vorrichtung nach einem der Ansprüche 8 oder 9, **dadurch gekennzeichnet**, daß die Gabeln (16) auf einem Gleitführungsgestell (19) quer zum Laserstrahl (1) aufeinander zu oder voneinander weg verstellbar sind.

11. Vorrichtung nach Anspruch 10, **dadurch gekennzeichnet**, daß das Gleitführungsgestell (19) im wesentlichen aus zwei parallelen Schlittenstangen (20) mit darauf gleitbeweglichen, je eine Gabel (16) tragenden Schlitten (21) besteht, die an gegenläufigen Trums (41',41'') eines von einem Stellmotor (23) antreibbaren Antriebsriemens (41) befestigt werden.

12. Vorrichtung nach einem oder mehreren der Ansprüche 6 bis 11, **dadurch gekennzeichnet**, daß die Meßeinrichtung (13) für jeden Drahtsensor (2) einen vorgeschalteten Signalgeber (25), einen nachgeschalteten Analog/Digitalwandler (26) und als Mittel zur rechnerischen Bestimmung des Strahlrandes (3) einen alle Meßsignale auswertenden Rechner (27) hat, der an den Stellmotor (23) angeschlossen ist und eine Anzeigeeinrichtung (28) aufweist.

13. Vorrichtung nach Anspruch 12, **dadurch gekennzeichnet**, daß dem Analog/Digitalwandler (26) ein Addierglied (29) vorgeschaltet ist, welches seinem Eingangssignal einen daraus mit einem Differenzierglied (11') gewonnenen Signalanteil aufzuprägen vermag.

14. Vorrichtung nach Anspruch 12, **dadurch gekennzeichnet**, daß der Rechner (27) an den Antrieb (57 bis 60) eines die Strahllage beeinflussenden Spiegelsystems (22) angeschlossen ist.

## Claims

1. Method for determining the position of a laser beam (1), in which temperature-dependent electrical wire sensors (2) absorbing a part of the radiation energy are arranged around the beam at predetermined positions adjacent to the beam edge (3), in which the wire sensors (2) are moved on a predetermined path for each coordinate axis (x, y) between beam edge (3) and beam centre (4), and in which with the help of measured values (5) from the sensors conclusions are drawn as to the position of the beam axis (8), characterised in that the wire sensors (2) are moved stepwise from outside the laser beam region and after each step the measured value (5) of the wire sensors (2) is recorded, that thereafter the beam edge (3) is determined as a threshold value (6) with a fixed percentage of the maximum recorded measured value (5m), that from the threshold values (6) parallel beam edge tangents (7x, 7y) are defined on the coordinate axes (x, y), and that then the position of the beam axis (8) is determined by determining the centre of gravity (9) of the area (10) enclosed by the beam edge tangents (7x, 7y).

2. Method according to claim 1, characterised in that the full beam diameter is detected by two pairs of wire sensors (2) lying opposite one another, and that the wire sensors (2) are moved back after the measuring process into a rest position at the beam edge.

3. Method according to claim 1 or 2, characterised in that the measured values (5) of the wire sensors (2) are processed by a differential-proportional circuit (11).

4. Method according to one or more of claims 1 to 3, characterised in that it is performed during a working process on a workpiece carried out by the laser beam (1) and the beam position determined thereby is used for the beam position adjustment.

5. Method according to one or more of claims 1 to 4, characterised in that it is carried out at two positions lying spaced one behind the other in the beam direction, and the laser beam (1) is aligned with the help of the parameter determined from both measuring positions.

6. Apparatus for determining the position of a laser beam (1), particularly for carrying out the method according to one or more of claims 1 to 5, comprising at least two temperature-dependent electrical wire sensors (2) which are adjustable by motor means on a support (12) perpendicular to the beam (1) and are connected to a measuring device, characterised in that the wire sensors (2) are wires (14 to 14''') enclosing an area of measurement (15), that the support (12) is adjustable in steps to change the area of measurement (15), and that the measuring device includes means (27) for computerised determination of the beam edge (3) of the laser beam (1).

7. Apparatus according to claim 6, characterised in that four wire sensors (2) are arranged in pairs parallel to each other and the wire pairs (14, 14''; 14', 14''') are arranged perpendicular to each other.

8. Apparatus according to claim 6 or 7, characterised in that the support (12) consists of two U-shaped forks (16) with their open ends facing each other, and that each fork (16) holds two wire sensors (2) under tension in a crossed configuration.

9. Apparatus according to one or more of claims 6 to 8, characterised in that for each wire sensor (2) there is provided a clamping device (31, 32) outside the internal space (18) of the fork.

10. Apparatus according to one of claims 8 or 9, characterised in that the forks (16) are adjustable towards one another or away from one another transversely to the laser beam (1) on a sliding guide frame (19).

11. Apparatus according to claim 10, characterised in that the sliding guide frame (19) essentially comprises two parallel carriage rods (20) with carriages (21) slidably movable thereon, with each carriage one fork (16), wherein the carriages are fixed to opposed runs (41', 41'') of a driving belt (41) which is drivable by a servomotor (23).

12. Apparatus according to one or more of claims 6 to 11, characterised in that the measuring device (13) for each wire sensor (2) comprises a series-connected signal transmitter (25), a subsequent analogue to digital converter (26) and, as means for computerised determination of the beam edge (3), a computer (27) to evaluate all measured signals, wherein said computer is connected to the servomotor (23) and includes an indicating device (28).

13. Apparatus according to claim 12, characterised in that the analogue to digital converter (26) is connected to follow an adding circuit (29) which has impressed on its input signal a signal component obtained from a differentiating circuit (11').

14. Apparatus according to claim 12, characterised in that the computer (27) is connected to the drive (57 to 60) of a mirror system (22) which influences the beam position.

## Revendications

1. Procédé pour déterminer la position d'un rayon laser (1), selon lequel des détecteurs électriques à fils (2) indépendants de la température et absorbant une partie de l'énergie de rayonnement sont disposés autour du rayon, à des positions prédéterminées, près du bord (3) du rayon, selon lequel les détecteurs à fils (2) sont déplacés sur une trajectoire prédéterminée pour chaque axe de coordonnées (x, y), entre le bord (3) et le centre (4) du rayon, et selon lequel on déduit, à l'aide de valeurs de mesure de détecteur (5), la position de l'axe (8) du rayon, caractérisé en ce que les détecteurs à fils (2) sont déplacés par étapes à partir de l'extérieur de la zone du rayon laser et après chaque étape, la valeur de mesure (5) des détecteurs à fils (2) est enregistrée, en ce que le bord (3) du rayon est ensuite calculé avec un pourcentage déterminé de la valeur de mesure enregistrée maximale (5m), comme valeur seuil (6), en ce que des tangentes (7x, 7y) au bord du rayon parallèles aux axes de coordonnées (x, y) sont définies à partir des valeurs seuils (6), et en ce que la position de l'axe (8) du rayon est ensuite calculée grâce à la détermination du centre de gravité (9) de la surface (10) définie par les tangentes (7x, 7y) au bord du rayon.

2. Procédé selon la revendication 1, caractérisé en ce que tout le diamètre du rayon est détecté par deux paires de détecteurs à fils (2) se faisant face, et en ce que les détecteurs à fils (2) sont ramenés, après l'opération de mesure, dans une position de repos prévue du côté du bord du rayon.

3. Procédé selon la revendication 1 ou 2, caractérisé en ce que les valeurs de mesure (5) des détecteurs à fils (2) sont détectées par l'intermédiaire d'un organe différentiel-proportionnel (11).

4. Procédé selon l'une au moins des revendications 1 à 3, caractérisé en ce qu'il est exécuté pendant une opération d'usinage d'une pièce effectuée à l'aide du rayon laser (1), et la position du rayon alors calculée est utilisée pour le réglage de ladite position.

5. Procédé selon l'une au moins des revendications 1 à 4, caractérisé en ce qu'il est exécuté au niveau de deux points espacés situés l'un derrière l'autre dans le sens du rayon, et le rayon laser (1) est orienté à l'aide des paramètres déterminés par les deux points de mesure.

6. Dispositif pour déterminer la position d'un rayon laser (1), notamment pour exécuter les procédés selon l'une au moins des revendications 1 à 5, comportant au moins deux détecteurs électriques à fils (2) indépendants de la température, qui sont aptes à être déplacés à l'aide d'un moteur transversalement au rayon (1), avec une fixation (12), et qui sont reliés à un dispositif de mesure, caractérisé en ce que les détecteurs à fils (2) sont des fils (14 à 14''') définissant une surface de mesure (15), en ce que la fixation (12) est apte à être déplacée par étapes dans le sens d'une variation de la surface de mesure (15), et en ce que le dispositif de mesure contient des moyens (27) pour déterminer par calcul le bord (3) du rayon laser (1).

7. Dispositif selon la revendication 6, caractérisé en ce que quatre détecteurs à fils (2) sont disposés parallèlement par paires, et les paires de fils (14, 14'' ; 14', 14''') sont disposées à angle droit l'une par rapport à l'autre.

8. Dispositif selon la revendication 6 ou 7, caractérisé en ce que la fixation (12) se compose de deux fourches en U (16) qui sont tournées l'une vers l'autre, avec leur côté ouvert, et en ce que chaque fourche (16) tient deux fils (2) tendus en croix.

9. Dispositif selon l'une au moins des revendications 6 à 8, caractérisé en ce qu'il est prévu, pour chaque détecteur à fil (2), un dispositif tendeur (31, 32) en dehors de l'intérieur (18) des fourches.

10. Dispositif selon l'une des revendications 8 ou 9, caractérisé en ce que les fourches (16) sont aptes à être rapprochées ou éloignées l'une de l'autre sur un bâti à guidage coulissant (19), transversalement au rayon laser (1).

11. Dispositif selon la revendication 10, caractérisé en ce que le bâti à guidage coulissant (19) se compose essentiellement de deux barres de chariot parallèles (20) comportant, sur elles, des chariots coulissants (21) qui portent chacun une fourche (16) et sont fixés à des brins opposés (41', 41'') d'une courroie d'entraînement (41) apte à être entraînée par un servomoteur (23).

12. Dispositif selon l'une au moins des revendications 6 à 11, caractérisé en ce que le dispositif de mesure (13) comporte pour chaque détecteur à fils (2) un émetteur de signaux (25) monté en amont, un convertisseur analogique/numérique (26) monté en aval et, comme moyen pour déterminer par calcul le bord (3) du rayon, un calculateur (27) qui analyse tous les signaux de mesure et qui est relié au servomoteur (23) et présente un dispositif d'affichage (28).

13. Dispositif selon la revendication 12, caractérisé en ce qu'il est prévu, monté en amont du convertisseur analogique/numérique (26), un organe additionneur (29) qui peut imprimer à son signal d'entrée une partie de signal obtenue à partir de celui-ci à l'aide d'un organe différenciateur (11').

14. Dispositif selon la revendication 12, caractérisé en ce que le calculateur (27) est relié au mécanisme d'entraînement (57 à 60) d'un système de miroirs (22) influant sur la position du rayon.
